# EUROPÄISCHE PATENTSCHRIFT

(11) **EP 1 364 121 B1**
(45) Veröffentlichungstag und Bekanntmachung des Hinweises auf die Patenterteilung: **25.07.2007**
(21) Anmeldenummer: 02712737.2
(22) Anmeldetag: 01.02.2002
(51) Int. Cl.: F02M 61/16, F16L 37/088

(54) **SPANNBAUGRUPPE**
CLAMPING ASSEMBLY
MODULE DE SERRAGE

(30) Priorität: 21.02.2001 DE 10108201
(43) Veröffentlichungstag der Anmeldung: 26.11.2003
(73) Patentinhaber: ROBERT BOSCH GMBH, 70442 Stuttgart (DE)
(72) Erfinder: NIESLONY, Markus, 73084 Salach (DE)
(86) Internationale Anmeldenummer: PCT/DE2002/000371
(87) Internationale Veröffentlichungsnummer: WO 2002/066823

(56) Entgegenhaltungen:
- DE-A- 2 303 506
- US-A- 1 771 949

## Beschreibung

### Stand der Technik

Die Erfindung betrifft eine Spannbaugruppe, insbesondere zur Verwendung an einem Einspritzventil, mit den Merkmalen des Oberbegriffs des unabhängigen Anspruchs 1.

Eine solche Spannbaugruppe ist beispielsweise aus der Druckschrift DE 2 303 506 A bekannt. Die dort gezeigte Spannbaugruppe umfaßt als erstes Bauteil einen Zylinderkopf einer Brennkraftmaschine. Ein das zweite Bauteil darstellendes Einspritzventil mit im wesentlichen zylinderförmigen Außenmantel liegt mit einer Stützfläche in einer Aufnahme des Zylinderkopfes an diesem an und ist mittels einer als Hohlschraube ausgebildeten Spannhülse und mittels eines in einer Ringnut des Einspritzventils festgelegten Sprengrings im Zylinderkopf eingespannt, wozu die Spannhülse ein Außengewinde aufweist, das in ein Innengewinde des Zylinderkopfes einschraubbar ist. Die Spannhülse weist hierfür an ihrem dem Zylinderkopf zugewandten Ende als erste Spannschulter eine Ausdrehung auf, in welcher der Sprengring beim Festspannen der Spannhülse zur Anlage gelangt. Der dem Zylinderkopf zugewandte Abschnitt der Ringnut des Einspritzventils dient als zweite Spannschulter. Der Sprengring wird beim Festspannen zischen der ersten und zweiten Spannschulter eingespannt.

Bei der bekannten Spannbaugruppe ist die Spannhülse auf das von der Stützfläche des ersten Bauteils abgewandte Ende des das zweite Bauteil darstellenden Einspritzventils aufgeschoben und befindet sich ausgehend vom Zylinderkopf hinter dem Sprengring. Dies macht es erforderlich, daß der Durchmesser des zweiten Bauteil hinter dem Sprengring durchgehend kleiner ausgebildet ist als der Innendurchmesser der Spannhülse, so daß die Spannhülse problemlos über den Außenmantel geschoben werden kann. Dieser Teil des Außenmantels darf daher keine Stufe und keinen seitlich abstehenden Stutzen aufweisen. Weiterhin machen diese Bedingungen bei der Herstellung des zweiten Bauteils einen erhöhten Zerspanungs- und Umformungsaufwand erforderlich. Soll darüber hinaus beispielsweise das erste Bauteil ein Außengewinde und die Spannhülse ein Innengewinde aufweisen, welches mit dem Außengewinde des ersten Bauteils verschraubt wird, muß der mit dem Innengewinde versehene Abschnitt der Spannhülse über den Außenmantel des zweiten Bauteils geschoben werden, was einerseits ein großes Spiel zwischen der Innenwandung der Spannhülse und dem Außenmantel voraussetzt und andererseits zur Folge haben kann, daß das Innengewinde der Spannhülse beispielsweise durch Anstoßen am Sprengring beschädigt wird.

Durch die US 1771949 ist eine Spannbaugruppe bekannt, bei der zwei Bauteile axial zusammenfügbar sind. Dabei weist ein sogenanntes äußeres Bauteil eine Öffnung auf, die über einen Stutzen eines sogenannten inneren Bauteils aufgeschoben werden kann. Am Stutzen sind Einschnürungen angebracht, die das Aufsetzen eines radial verformbaren Rings auf dem Stutzen ermöglichen. Der Ring verhindert in der Montagelage auf dem Stutzen aufgrund seines Außendurchmessers das Zusammenfügen der beiden Bauteile. Erst durch ein vorübergehendes Zusammendrücken des Rings läßt sich die Öffnung des äußeren Bauteils über den mit dem Ring versehenen Stutzen schieben. Nach dem Passieren des Ringes durch die Öffnung federt der Ring wieder auf und sichert die Kopplung der beiden Bauteile.

### Vorteile der Erfindung

Bei der erfindungsgemäßen Spannbaugruppe mit den kennzeichnenden Merkmalen des Anspruchs 1 kann die Spannhülse vorteilhaft von dem der Stützfläche des ersten Bauteils aus zugewandten Ende des zweiten Bauteils auf den Außenmantel des zweiten Bauteils aufgeschoben werden. Da der Sprengring als ein in radialer Richtung elastisch federndes Rastmittel ausgebildet ist und das zweite Bauteil eine Hinterschneidung aufweist, in welche der Sprengring hineinverformbar ist, und an der Innenwandung der Spannhülse als Gegenrastmittel eine den Sprengring aufnehmende Ringnut ausgebildet ist, kann die Spannhülse beim Aufschieben ein Stück weit über den Sprengring geschoben werden, bis der dadurch elastisch vorgespannte Sprengring in die Ringnut der Spannhülse einrastet, wodurch die Spannhülse an dem zweiten Bauteil unverlierbar angeordnet ist. Beim anschließenden Verschrauben der Spannhülse mit dem ersten Bauteil wird der Sprengring aus der Hinterschneidung gezogen und gegen die Spannschulter des zweiten Bauteils gepreßt. Vorteilhaft wird hierdurch erreicht, daß der mit dem Gewinde versehene Abschnitt der Spannhülse nicht über den Sprengring geschoben werden muß. Mit der erfindungsgemäßen Spannbaugruppe wird vorteilhaft bei geringem Montageaufwand und insbesondere auch bei kleinem Bauraum eine robuste Befestigung der beiden Bauteile erreicht. Das Fügen der Bauteile erfolgt erst nach vollständiger Bearbeitung, so daß keine gefangenen Bauteile während der Herstellung gehandhabt werden müssen.

Vorteilhafte Ausgestaltungen und Weiterbildungen der Erfindung werden durch die in den Unteransprüchen enthaltenen Merkmale ermöglicht.

Dadurch, daß die zweite Spannschulter zur Seite der Stützfläche angeordnet ist und als axiale Begrenzung einer Ringnut im zweiten Bauteil dient, die eine Tiefe größer dem Drahtquerschnitt des Sprengrings hat, und daß die Ringnut eine der zweiten Spannschulter gegenüberliegende Anschlagfläche für den Sprengring aufweist, kann vorteilhaft erreicht werden, daß der Sprengring beim Aufschieben der Spannhülse an der Anschlagfläche zur Anlage gelangt und automatisch in die Hinterschneidung radial hineinverformt wird.

Vorteilhaft weist die Innenwandung der Spannhülse an ihrem auf das zweite Bauteil aufgeschobenen Ende eine umlaufende Fase auf, welche das Aufschieben auf den Sprengring erleichtert. Die Fase der Spannhülse wirkt mit der Anschlagfläche des zweiten Bauteils beim Aufschieben der Spannhülse derart zusammen, daß der Sprengring ohne Zuhilfenahme eines Werkzeuges an der Fase entlang gleitend radial in die Hinterschneidung hineinverformt wird.

Besonders vorteilhaft ist es, wenn die an dem zweiten Bauteil ausgebildete Hinterschneidung durch eine an die Spannschulter angrenzende, im wesentlichen konusförmige Fläche gebildet wird, da in diesem Fall die konusförmige Fläche beim Verschrauben der Spannhülse mit dem ersten Bauteil eine zentrierende Wirkung auf den in die Spannhülse eingerasteten Sprengring und die Spannhülse ausübt.

### Zeichnungen

Ein Ausführungsbeispiel der Erfindung ist in den Zeichnungen dargestellt und wird in der nachfolgenden Beschreibung erläutert. Es zeigt
Fig. 1 einen Querschnitt durch die erfindungsgemäße Spannbaugruppe, welche in dem dargestellten Ausführungsbeispiel am Einspritzventil einer Brennkraftmaschine angeordnet ist,
Fig. 2 eine Draufsicht auf den Sprengring,
Fig. 3 bis Fig. 7 die Montage der Spannbaugruppe in einer vereinfachten Darstellung.

### Beschreibung eines Ausführungsbeispiels

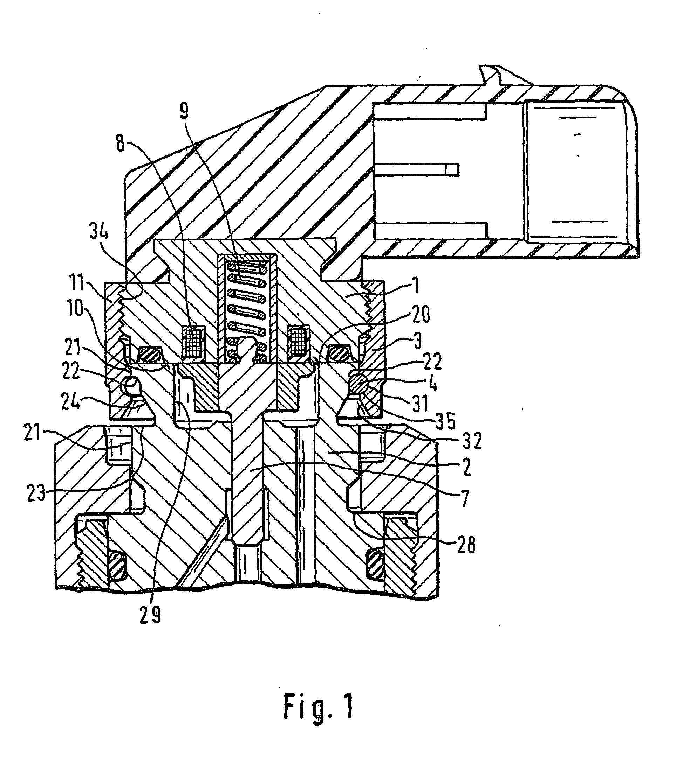

Fig. 1 zeigt ein erstes Ausführungsbeispiel einer erfindungsgemäßen Spannbaugruppe. In diesem Ausführungsbeispiel ist die Spannbaugruppe an einem Einspritzventil für Brennkraftmaschinen angeordnet, wobei ein erstes Bauteil 1 der Spannbaugruppe durch die Magnetgruppe des Einspritzventils ausgebildet wird. Die Magnetgruppe 1 umfaßt einen Magnetkern mit Polfläche 10 und Spule 8, sowie eine Ventilfeder 9, welche einen axial beweglichen Anker 7 mit Ankerplatte und Ankerbolzen beaufschlagt. Ein zweites Bauteil 2 der Spannbaugruppe stellt eine Ventilgruppe des Einspritzventils dar. Die Ventilgruppe 2 weist eine sich an der Polfläche 10 der Magnetgruppe 1 abstützende Stützfläche 20 auf. Eine Ausnehmung 29 in der Stützfläche 20 bildet einen Ankerraum zur Aufnahme des Ankers 7 aus. Der bewegliche Anker steuert den Kraftstoffabfluß aus seinem Steuerdruckraum, welcher wiederum den Einspritzvorgang des Einspritzventils steuert. Wie in Fig. 1 dargestellt ist, umfaßt die Spannbaugruppe weiterhin eine Spannhülse 3 und einen Sprengring 4.

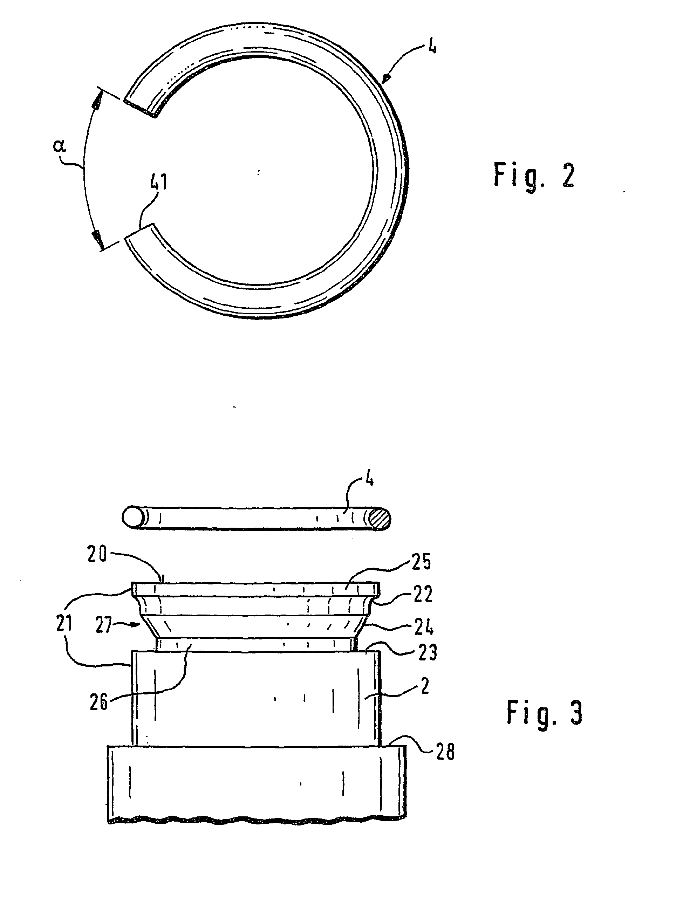

Wie am besten in der vereinfachten Darstellung von Fig. 3 zu erkennen ist, weist das erste Bauteil 2 auf einem Teil seiner Länge einen zylinderförmige Außenmantel 21 auf, welcher sich nicht über die ganze Länge des Bauteils 2 zu erstrecken braucht. In dem hier dargestellten Ausführungsbeispiel wird der zylinderförmige Außenmantelabschnitt 21 beispielsweise durch eine Schulter 28 begrenzt. In der Nähe einer Stützfläche 20 des zweiten Bauteil 2 ist in den Außenmantel 21 des zweiten Bauteils 2 eine Ringnut 27 eingebracht, so daß ein schmaler Abschnitt 25 des Außenmantels 21 einen umlaufenden Kragen bildet. Ausgehend von dem Kragen 25 bildet die Ringnut 27 eine zweite Spannschulter 22 zur Anlage eines Sprengrings 4 aus, an welche sich eine Hinterscheidung 24 in Form einer konusförmigen Fläche mit sich verjüngendem Durchmesser anschließt. Die konusförmige Fläche geht in einen kurzen zylinderförmigen Flächenabschnitt 26 über, welcher wiederum von einer senkrecht zu dem Außenmantel 21 verlaufenden Ringfläche 23 absteht, die der Spannschulter 22 gegenüberliegt. Die Ringfläche 23 dient als Anschlagfläche für den Sprengring 4.

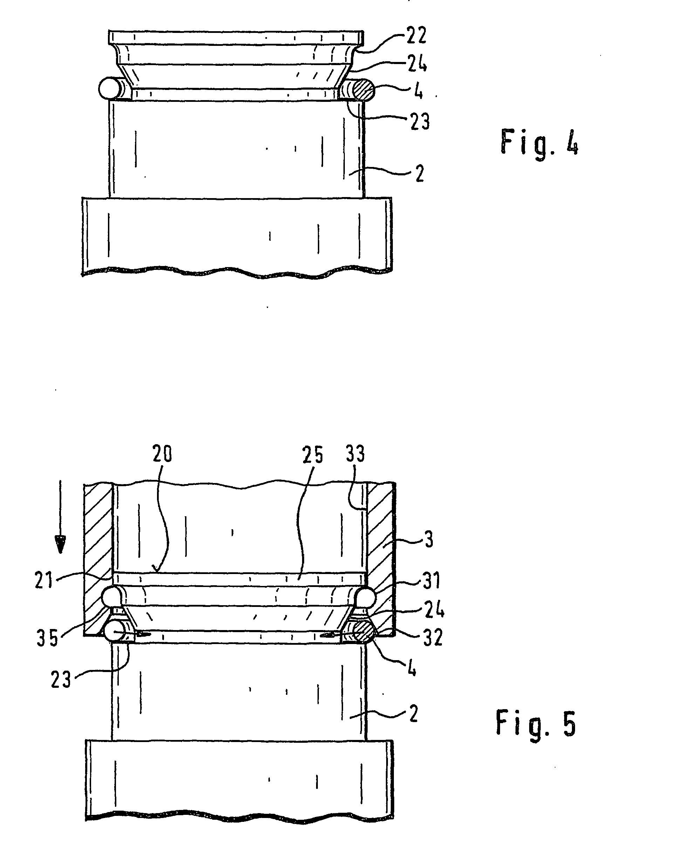

Der Sprengring 4 ist in Fig. 2 und Fig. 3 dargestellt. Der Sprengring ist aus einem elastisch federnden Material, insbesondere einem elastisch biegsamen Metall hergestellt und weist in dem hier dargestellten bevorzugten Ausführungsbeispiel einen kreisförmigen Drahtquerschnitt auf. Aber auch andere Querschnitte sind möglich. Wie am besten in Fig. 2 zu erkennen ist, weist der Sprengring eine Öffnung 41 auf. Der Öffnungswinkel α der Öffnung 41 ist derart bemessen, daß der Sprengring 4 einerseits die radiale Einfederung während der Montage der Spannhülse 3 zuläßt (Fig. 5), andererseits jedoch der Abstützwinkel (360°-α), über den der Sprengring an der zweiten Spannschulter 22 zur Anlage gelangt, nicht zu klein wird. In einem bevorzugten Ausführungsbeispiel ist der Öffnungswinkel α zwischen 40° und 60° groß. Der federelastische Sprengring 4 kann bei der Montage an dem zweiten Bauteil 2 elastisch etwas nach außen gebogen und mit der Öffnung 41 in die Ringnut 27 des zweiten Bauteils 2 eingeklipst oder in axialer Richtung über den umlaufenden Kragen 25 geführt werden, wie dies in Fig. 4 dargestellt ist. Die Elastizität des Sprengrings 4 ist ausreichend groß bemessen, so daß dieser bei der Festlegung am zweiten Bauteil 2 und beim späteren Einfedern in die Ringnut 27 (Fig. 5) nicht bleibend verformt wird. Vor der Montage der Spannhülse 3 liegt der Sprengring 4 radial beweglich an der Anschlagfläche 23 an, wie dies in Fig. 4 dargestellt ist.

Wie in Fig. 1 und Fig. 5 zu erkennen ist, weist die Spannhülse 3 eine zylinderförmige Innenwandung 33 mit einem Innengewinde 34 auf. Das Innengewinde 34 ist in Fig. 5 der Einfachheit halber nicht dargestellt. Die Innenwandung 33 der Spannhülse 3 weist an dem von dem Innengewinde 34 abgewandten Ende eine Ringnut 31 und eine Fase 32 auf. Wie in Fig. 5 dargestellt ist, wird die Spannhülse 3 von der Stützfläche 20 des zweiten Bauteils 2 aus auf den Außenmantel 21 aufgeschoben, bis die Fase 32 an den Sprengring 4 anstößt. Beim weiteren Aufschieben der Spannhülse wird der an der Anschlagfläche 23 anliegende Sprengring 4 zunächst an der Fase 32 entlang gleitend radial nach innen elastisch zusammengedrückt und dringt dabei in die Hinterscheidung 24 ein.

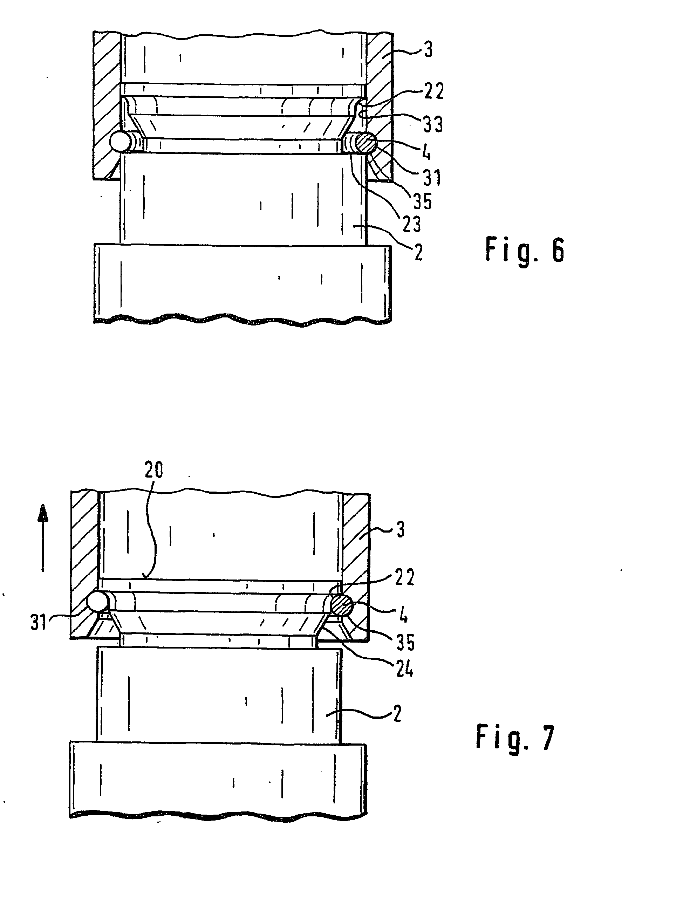

Beim weiteren Aufschieben der Spannhülse 3 rastet der elastisch gegen die Innenwandung 33 vorgespannte Sprengring 4 in die Ringnut 31 an der Innenwandung 33 der Spannhülse 3 ein, wie dies in Fig. 6 dargestellt ist. Der Sprengring 4 wird dabei auf etwa halben Umfang von der Ringnut 31 formschlüssig umfaßt. Die Spannhülse 3 ist nun mit dem zweiten Bauteil 2 unverlierbar verbunden. Die Spannhülse 3 kann axial hin und her bewegt werden, wobei die axiale Beweglichkeit der Spannhülse 3 durch die zweite Spannschulter 22 und die Anschlagfläche 23 begrenzt wird. Wie in Fig. 7 gezeigt, wird nun die Spannhülse 3 in Richtung des Pfeils entgegen der Fügerichtung von Fig. 5 zurückgeschoben, bis der Sprengring 4 an der zweiten Spannschulter 22 zur Anlage gelangt. Dabei gleitet der Sprengring 4 zunächst über die konusförmige Fläche der Hinterscheidung 24 und wird dabei zusammen mit der Spannhülse 3 automatisch zentriert. In dieser Stellung wird die Spannhülse 3 mit dem Innengewinde 34 auf ein Außengewinde 11 des ersten Bauteils 1 aufgeschraubt, wie dies in Fig. 1 gezeigt ist. Dabei gelangt die Stützfläche 20 des zweiten Bauteils 2 an der Fläche 10 des ersten Bauteils 1 zur Anlage. Beim Festspannen der Spannhülse 3 wird das zweite Bauteil 2 gegen das erste Bauteil 1 gespannt und ist dadurch an diesem festgelegt. Der Sprengring wird zwischen der zweiten Spannschulter 22 und der durch einen Abschnitt der Ringnut 31 gebildeten ersten Spannschulter 35 eingespannt.

Die hier dargestellte Spannbaugruppe ist in vielfältiger Form einsetzbar. Sie ist keinesfalls auf das obige Ausführungsbeispiel beschränkt, sondern allgemein in solchen Fällen anwendbar, in denen ein erstes Bauteil mit einem zweiten Bauteil mit zylinderförmigen Außenmantel mittels einer Spannhülse und eines Sprengrings verbunden wird. Abweichend von dem oben dargestellten Ausführungsbeispiel ist es möglich, die Spannhülse mit einem Außengewinde zu versehen und das erste Bauteil mit einem Innengewinde. Weiterhin kann beispielsweise die Anschlagfläche 23 entfallen, wenn der Sprengring 4 bei der Montage der Spannhülse 3 gegen ein geeignet ausgebildetes Werkzeug angedrückt wird, bis er in die Ringnut 32 der Spannhülse 3 einrastet. Weiterhin ist es möglich, die Hinterschneidung 24 durch eine nicht konsusförmige Fläche auszubilden. Wichtig ist, daß durch die Hinterscheidung 24 von der Stützfläche 20 aus gesehen, hinter der Spannschulter 22 ein Freiraum gebildet wird, welcher der Aufnahme des in radialer Richtung elastisch zusammengedrückten Sprengrings 3 dient, so daß die Spannhülse 3 über den Sprengring 4 gleitet kann, bis dieser in die Ringnut 31 einrastet.

## Patentansprüche

1. Spannbaugruppe, insbesondere zur Verwendung an einem Einspritzventil einer Brennkraftmaschine, umfassend ein erstes Bauteil (1) und ein an dem ersten Bauteil befestigbares, sich mit einer Stützfläche (20) an dem ersten Bauteils (1) abstützendes zweites Bauteil (2) mit einem im wesentlichen zylinderförmigen Außenmantel (21), welches zweite Bauteil (2) mittels einer auf den Außenmantel (21) aufgeschobenen und mit dem ersten Bauteil verschraubbaren Spannhülse (3) und mittels eines Sprengrings (4) gegen das erste Bauteil (1) spannbar ist, wobei der Sprengring (4) an einer an der Innenwandung (33) der Spannhülse (3) ausgebildeten ersten Spannschulter (35) und an einer am Außenmantel (21) des zweiten Bauteils (2) ausgebildeten zweiten Spannschulter (22) zur Anlage gelangt, der Sprengring (4) als ein in radialer Richtung elastisch federndes Rastmittel ausgebildet ist, der Außenmantel (21) des zweiten Bauteils (2), ausgehend von der Stützfläche (20) in axialer Richtung, hinter der Spannschulter (22) eine Hinterschneidung (24) aufweist, in welche der elastisch federnde Sprengring (4) radial nach innen elastisch hineinverformbar ist, so dass die Spannhülse (3) beim Aufschieben auf den Außenmantel (21) des zweiten Bauteils (2) von der Stützfläche (20) aus über den Sprengring (4) führbar ist, **dadurch gekennzeichnet, dass** der Sprengring (4) mit einer an der Innenwandung (33) der Spannhülse (3) als Gegenrastmittel ausgebildeten Ringnut (31) rastend in Eingriff bringbar ist.

2. Spannbaugruppe nach Anspruch 1 **dadurch gekennzeichnet, daß** die zweite Spannschulter (22) zur Seite der Stützfläche (20) angeordnet ist und als axiale Begrenzung einer Ringnut (27) im zweiten Bauteil (2) dient, die eine Tiefe größer dem Drahtquerschnitt des Sprengrings (4) hat.

3. Spannbaugruppe nach Anspruch 2, **dadurch gekennzeichnet, daß** die Ringnut (27) des zweiten Bauteils (2) eine der zweiten Spannschulter (22) gegenüberliegende Anschlagfläche (23) für den Sprengring (4) aufweist.

4. Spannbaugruppe nach einem der Ansprüche 1 bis 3, **dadurch gekennzeichnet, daß** die Innenwandung (33) der Spannhülse (3) an_ihrem auf das zweite Bauteil (2) aufgeschobenen Ende eine umlaufende Fase (32) aufweist.

5. Spannbaugruppe nach Anspruch 3 und 4, **dadurch gekennzeichnet, daß** die Fase (32) der Spannhülse (3) mit der Anschlagfläche (23) des zweiten Bauteils (2) derart zusammenwirkt, daß der beim Aufschieben der Spannhülse an der Anschlagfläche (23) zur Anlage gelangte Sprengring (4) an der Fase (32) entlang gleitend radial in die Hinterschneidung (24) hineinverformbar ist. (Fig. 5)

6. Spannbaugruppe nach einem der Ansprüche 1 bis 5, **dadurch gekennzeichnet, daß** die Hinterschneidung (24) durch eine unmittelbar an die zweite Spannschulter (22) angrenzende, im wesentlichen konusförmige Fläche gebildet wird.

7. Spannbaugruppe nach einem der vorstehenden Ansprüche, **dadurch gekennzeichnet, daß** die zweite Spannschulter (22) an die Form des Drahtquerschnittes des Sprengrings (4) angepaßt ist.

8. Spannbaugruppe nach einem der vorstehenden Ansprüche, **dadurch gekennzeichnet, daß** der Draht des Sprengrings (4) einen kreisförmigen Querschnitt aufweist.

9. Spannbaugruppe nach einem der vorstehenden Ansprüche, **dadurch gekennzeichnet, daß** die als Gegenrastmittel vorgesehene Ringnut (31) den Draht des Sprengrings (4) formschlüssig etwa auf halben Umfang umfaßt.

10. Spannbaugruppe nach einem der vorstehenden Ansprüche, **dadurch gekennzeichnet, daß** der in der Ringnut (31) eingerastete Sprengring (4) durch Verschrauben der Spannhülse (3) mit dem ersten Bauteil (1) zwischen der ersten Spannschulter (35) und der zweiten Spannschulter (22) einspannbar ist. (Fig. 7)

11. Spannbaugruppe nach einem der vorstehenden Ansprüche, **dadurch gekennzeichnet, daß** die Spannhülse (3) ein Innengewinde (34) aufweist und das erste Bauteil (1) ein Außengewinde (11).

## Claims

1. Clamping assembly, in particular for use on an injection valve of an internal combustion engine, comprising a first component (1) and a second component (2) which can be fastened to the first component, is supported on the first component (1) by way of a supporting face (20) and has a substantially cylindrical outer casing (21), which second component (2) can be clamped against the first component (1) by means of a clamping sleeve (3) which is pushed onto the outer casing (21) and can be screwed to the first component and by means of a circlip (4), the circlip (4) coming into contact with a first clamping shoulder (35) which is formed on the inner wall (33) of the clamping sleeve (3) and with a second clamping shoulder (22) which is formed on the outer casing (21) of the second component (2), the circlip (4) being configured as a latching means which is elastically resilient in the radial direction, the outer casing (21) of the second component (2) having, behind the clamping shoulder (22) and starting from the supporting face (20). in the axial direction, an undercut (24), into which the elastically resilient circlip (4) can be deformed elastically in a radially inward manner, with the result that the clamping sleeve (3) can be guided from the supporting face (20) over the circlip (4) when being pushed onto the outer casing (21) of the second component (2), **characterized in that** the circlip (4) can be brought into latching engagement with an annular groove (31) which is formed on the inner wall (33) of the clamping sleeve (3) as a mating latching means.

2. Clamping assembly according to Claim 1, **characterized in that** the second clamping shoulder (22) is arranged to the side of the supporting face (20) and serves as an axial limitation of an annular groove (27) in the second component, which annular groove (27) has a greater depth than the wire cross section of the circlip (4).

3. Clamping assembly according to Claim 2, **characterized in that** the annular groove (27) of the second component (2) has a stop face (23) for the circlip (4), which stop face (23) lies opposite the second clamping shoulder (22).

4. Clamping assembly according to one of Claims 1 to 3, **characterized in that** the inner wall (33) of the clamping sleeve (3) has a circumferential bevel (32) on its end which is pushed onto the second component (2).

5. Clamping assembly according to Claims 3 and 4, **characterized in that** the bevel (32) of the clamping sleeve (3) interacts with the stop face (23) of the second component (2) in such a way that the circlip (4) which came into contact with the stop face (23) during pushing on of the clamping sleeve can be deformed radially into the undercut (24) in a sliding manner along the bevel (32) (Fig. 5).

6. Clamping assembly according to one of Claims 1 to 5, **characterized in that** the undercut (24) is formed by a substantially conical face which is directly adjacent to the second clamping shoulder (22).

7. Clamping assembly according to one of the preceding claims, **characterized in that** the second clamping shoulder (22) is adapted to the shape of the wire cross section of the circlip (4).

8. Clamping assembly according to one of the preceding claims, **characterized in that** the wire of the circlip (4) has a circular cross section.

9. Clamping assembly according to one of the preceding claims, **characterized in that** the annular groove (31) which acts as a mating latching means surrounds the wire of the circlip (4) with a form-fitting connection approximately over half the circumference.

10. Clamping assembly according to one of the preceding claims, **characterized in that** the circlip (4) which is latched into the annular groove (31) can be clamped between the first clamping shoulder (35) and the second clamping shoulder (22) by screwing the clamping sleeve (3) to the first component (1) (Fig. 7).

11. Clamping assembly according to one of the preceding claims, **characterized in that** the clamping sleeve (3) has an internal thread (34) and the first component (1) has an external thread (11).

## Revendications

1. Module de serrage, en particulier pour un injecteur d'un moteur à combustion interne, comprenant un premier composant (1) et un deuxième composant (2) pouvant être fixé au premier composant et s'appuyant par une surface d'appui (20) contre le premier composant (1), dont le deuxième composant (2) muni d'une enveloppe extérieure (21) pour l'essentiel cylindrique, peut être serré contre le premier composant (1) au moyen d'un manchon de serrage (3) glissé sur l'enveloppe extérieure (21) et vissé sur le premier composant, ainsi qu'au moyen d'un circlip (4) appuyé contre un premier épaulement de serrage (35) de la paroi intérieure (33) du manchon de serrage (3) et contre un deuxième épaulement de serrage (22) de l'enveloppe extérieure (21) du deuxième composant (2), le circlip (4) étant un moyen d'accrochage élastique dans la direction radiale, l'enveloppe extérieure (21) du deuxième composant (2) présentant derrière l'épaulement de serrage (22) à partir de la surface d'appui (20) dans la direction axiale, une contre-dépouille (24) dans laquelle le circlip élastique (4) peut se déformer élastiquement de façon radiale vers l'intérieur, de sorte qu'en le poussant sur l'enveloppe extérieure (21) du deuxième composant (2) depuis la surface d'appui (20) le manchon de serrage (3) est guidée au-dessus du circlip (4),
**caractérisé en ce que**
le circlip (4) peut être engagé dans une rainure annulaire (31) formée dans la paroi intérieure (33) du manchon de serrage (3) agissant ainsi comme moyen de contre-accrochage.

2. Module de serrage selon la revendication 1,
**caractérisé en ce que**
le deuxième épaulement de serrage (22) est disposé du côté de la surface d'appui (20) et sert de limitation axiale dans le deuxième composant (2) d'une rainure annulaire (27) dont la profondeur est supérieure à la section transversale du fil du circlip (4).

3. Module de serrage selon la revendication 2,
**caractérisé en ce que**
la rainure annulaire (27) du deuxième composant (2) présente une surface de butée (23) pour le circlip (4) opposée au deuxième épaulement de serrage (22).

4. Module de serrage selon l'une quelconque des revendications 1 à 3,
**caractérisé en ce que**
la paroi intérieure (33) du manchon de serrage (3) présente un chanfrein (32) circulaire au niveau de son extrémité poussée sur le deuxième composant (2).

5. Module de serrage selon les revendications 3 et 4,
**caractérisé en ce que**
le chanfrein (32) du manchon de serrage (3) coopère avec la surface de butée (23) du deuxième composant (2), de sorte qu'en poussant le manchon de serrage le circlip (4), s'appuyant contre la surface de butée (23), se déforme dans la contre-dépouille (24) en glissant radialement le long du chanfrein (32). (figure 5)

6. Module de serrage selon l'une quelconque des revendications 1 à 5,
**caractérisé en ce que**
la contre-dépouille (24) est formée par une surface essentiellement conique directement adjacente au deuxième épaulement de serrage (22).

7. Module de serrage selon l'une quelconque des revendications précédentes,
**caractérisé en ce que**
le deuxième épaulement de serrage (22) est adapté à la forme de la section transversale du fil du circlip (4).

8. Module de serrage selon l'une quelconque des revendications précédentes,
**caractérisé en ce que**
le fil du circlip (4) présente une section transversale circulaire.

9. Module de serrage selon l'une quelconque des revendications précédentes,
**caractérisé en ce que**
la rainure annulaire (31) prévue comme moyen de contre-accrochage entoure le fil du circlip (4) par complémentarité de forme sensiblement sur la moitié de la périphérie.

10. Module de serrage selon l'une quelconque des revendications précédentes,
**caractérisé en ce que**
le circlip (4) engagé dans la rainure annulaire (31) peut être enserré entre le premier épaulement de serrage (35) et le deuxième épaulement de serrage (22) par vissage du manchon de serrage (3) avec le premier composant (1). (figure 7)

11. Module de serrage selon l'une quelconque des revendications précédentes,
**caractérisé en ce que**
le manchon de serrage (3) présente un taraudage (34) et le premier composant (1) un filetage mâle (11).
